# EUROPÄISCHE PATENTSCHRIFT

(11) **EP 2 182 459 B1**
(45) Veröffentlichungstag und Bekanntmachung des Hinweises auf die Patenterteilung: **23.11.2011**
(21) Anmeldenummer: 09173896.3
(22) Anmeldetag: 23.10.2009
(51) Int. Cl.: G06F 21/00

(54) **Anordnung zum Protokollieren und Kontrollieren von Benutzungsvorgängen**
System for recording and monitoring usage processes
Agencement pour établir un protocole et contrôler des processus d'utilisation

(30) Priorität: 03.11.2008 DE 102008056961
(43) Veröffentlichungstag der Anmeldung: 05.05.2010
(73) Patentinhaber: Aurenz Gmbh, 72622 Nürtingen (DE)
(72) Erfinder: Aurenz, Hans-Peter, 72622 Nürtingen (DE)
(74) Vertreter: Patentanwälte Ruff, Wilhelm, Beier, Dauster & Partner

(56) Entgegenhaltungen:
- WO-A1-02/01381
- DE-A1- 10 104 486
- DE-A1-102006 038 372
- US-A1- 2002 111 887
- US-B1- 6 745 367

## Beschreibung

Die Erfindung betrifft eine Anordnung zum Protokollieren und Kontrollieren von Benutzungsvorgängen, die bei der Benutzung des Internet auftreten.

Büroarbeitsplätze sind mit Computern ausgestattet, die normalerweise auch die Möglichkeit des Zugriffs auf das Internet haben. Der Zugriff auf das Internet wird ähnlich wie bei Telefonaten auch privat genutzt.

In vielen Firmen gibt es Regelungen darüber, ob das private Surfen im Internet erlaubt ist oder nicht. Auch privater E-Mail Verkehr, der über das Internet abgewickelt werden kann, ist möglich.

Es ist bereits vorgeschlagen worden, dass das private Internetsurfen von dem Benutzer angemeldet wird, so dass dann die Protokollierung mit dem Zusatz privat versehen werden kann. Bei diesem Vorschlag werden die privaten und dienstlichen Verbindungsdaten zwar unterschiedlich gekennzeichnet, ihre Protokollierung beziehungsweise Aufzeichnung aber in der gleichen Weise durchgeführt. Es gibt also keine Trennung zwischen Benutzungsdaten der privaten und der dienstlichen Benutzung.

Die Möglichkeit der privaten Benutzung von solchen Kommunikationseinrichtungen ist aber zumindest in einem gewissen Ausmaß sinnvoll. Wenn eine Begrenzung der privaten Benutzung vereinbart ist, muss die Dauer der Verbindung gespeichert werden, um ein Überschreiten der Begrenzung feststellen zu können und entsprechende Maßnahmen einzuleiten.

Wenn die private Benutzung des Internets mithilfe von Einrichtungen des Unternehmens erlaubt ist, dürfen aber nicht alle Daten, die bei der Verbindung entstehen, abgespeichert werden. Bei einer dienstlichen Benutzung dürfen andere Verbindungsdaten gespeichert werden.

Es ist bereits bekannt, dass ein Benutzer mithilfe eines bewussten Schaltvorgangs, der auch über die Tastatur ausgeübt werden kann, seinen Internet Zugriff als privat vermerkt. Dann erfolgt aus Gründen des Datenschutzes eine Abspeicherung von Verbindungsdaten nur ohne Identifizierung des Benutzers (DE 102006038372).

Bei einer solchen Einrichtung ist ein Missbrauch aber nicht ausgeschlossen. Es besteht sowohl die Möglichkeit der bewusst falschen Angabe als auch der versehentlich falschen Angabe.

Der Erfindung liegt die Aufgabe zu Grunde, eine Möglichkeit zu schaffen, die dienstliche Internet- Benutzung auf Missbrauch zu überwachen. Zur Lösung dieser Aufgabe schlägt die Erfindung einer Anordnung mit den im Anspruch 1 genannten Merkmalen sowie das in den Patentansprüchen beschriebene Verfahren vor. Weiterbildungen der Erfindung sind Gegenstand von Unteransprüchen.

Die Erfindung geht von der Annahme aus, dass der überwiegende Teil der Benutzung korrekt vermerkt wird. Durch die Vergleichseinrichtung wird es möglich, eine Überprüfung der dienstlichen Benutzung auf diejenigen Adressen zu beschränken, die auch bei der privaten Benutzung aufgetaucht sind. Internetadressen, die in dem der privaten Benutzung zugeordneten Speicher nicht auftauchen, können daher als dienstliche Adressen interpretiert werden, so dass sie bei einer stichprobenartigen Überprüfung nicht berücksichtigt zu werden brauchen.

Um bei der privaten Benutzung die Belange des Datenschutzes berücksichtigen zu können, kann erfindungsgemäß vorgesehen sein, dass die angewählten Internetadressen ohne eine Identifizierung des Benutzungsgerät oder des Benutzers aufgezeichnet werden. Es ist aber ebenfalls möglich, dass diese Angaben mit aufgezeichnet werden, aber in der Weise verschlüsselt werden, dass sie nicht ohne weiteres abgefragt oder gelesen werden können.

Eine Überprüfung beschränkt sich also auf die in beiden Speichern vorhandenen Internetadressen.

Nun gibt es Adressen, von denen man weiß, dass sie sowohl dienstlich als auch privat angesprochen werden können, wie zum Beispiel die Telefonauskunft, Fahrpläne oder dergleichen. Um nun die Überprüfung der dienstlichen Benutzung weiter zu vereinfachen, kann erfindungsgemäß in Weiterbildung vorgesehen sein, dass solche doppelt benutzbare Adressen in einer Tabelle hinterlegt werden, die bei der Überprüfung berücksichtigt wird. Es werden also nur solche Internetadressen bei der dienstlichen Benutzung überprüft, die in dem der privaten Benutzung zugeordneten Speicher, aber nicht in der Tabelle vorhanden sind.

Wird bei einer stichprobenartigen Benutzung ein Treffer gefunden, das heißt eine internetadresse, die nicht in der Tabelle steht aber in dem der privaten Nutzung zugeordneten Speicher, so erfolgt eine Anzeige beziehungsweise Ausgabe des Geräts und/oder der Person, die diese Internetadresse angewählt hat.

Anstelle der Aufzeichnung von privat angewählten Internetadressen kann erfindungsgemäß in Weiterbildung auch vorgesehen sein, nur den Hash-Wert dieser Internetadressen abzuspeichern, der dann ebenfalls mit dem Hash-Wert der der dienstlichen Benutzung zugeordneten Internetadressen verglichen werden kann.

Weitere Merkmale, Einzelheiten und Vorzüge der Erfindung ergeben sich aus der folgenden Beschreibung einer bevorzugten Ausführungsform der Erfindung, den Patentansprüchen und der Zusammenfassung, deren beider Wortlaut durch Bezugnahme zum Inhalt der Beschreibung gemacht wird, sowie anhand der Zeichnung. Hierbei zeigen:
- Figur 1: schematisch die Anordnung nach der Erfindung;
- Figur 2: den Ablauf des Verfahrens nach der Erfindung;
- Figur 3: die Anordnung bei der Auswertung;
- Figur 4: den Ablauf der Verfahrensschritte bei der Auswertung.

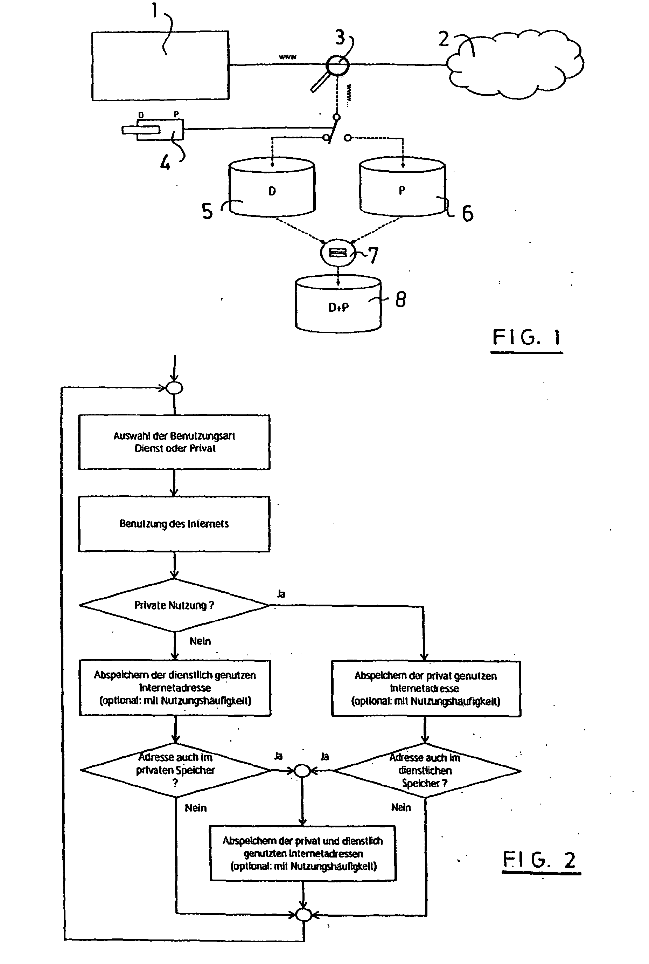

In Figur 1 ist schematisch ein Personal Computer 1 dargestellt, der den Zugriff auf das Internet 2 ermöglicht. Die am Computer direkt oder indirekt eingegebene Internetadresse wird an der Schnittstelle 3 zwischen dem Computer 1 und dem Internet 2 abgefragt. Die Abfrage der eingegebenen Internetadresse könnte auch an einer anderen Stelle erfolgen.
Je nach Stellung einer Schalteinrichtung 4 wird die Internetadresse entweder in einem Speicher 5 für dienstliche Zugriffe oder in einem Speicher 6 für private Zugriffe abgespeichert. An dem Computer 1 ist eine Eingabemöglichkeit für die Schalteinrichtung 4 vorgesehen, so dass der Benutzer vor dem Benutzen die Benutzungsart einstellen kann.

Mit beiden Speichern 5, 6 ist eine Vergleichseinrichtung 7 verbunden, die beispielsweise ständig oder in regelmäßigen Abständen diejenigen Adressen ermittelt, die in beiden Speichern vorhanden sind, und diese Adressen in einen weiteren Speicher 8 abspeichert, der nur solche Adressen enthält, die sowohl dienstlich als auch privat benutzt werden.

Die Figur zwei erläutert schematisch das Verfahren, das von der Erfindung vorgeschlagen wird. In einem ersten Schritt wird von dem Benutzer die Auswahl der Benutzungsart ausgewählt, nämlich dienstlich oder privat. Anschließend erfolgt der Zugriff auf das Internet. An der Schnittstelle 3 wird nun die Stellung der Schalteinrichtung 4 abgefragt. Bei einer dienstlichen Benutzung erfolgt das abspeichern der dienstlich genutzten Intemetadresse, gegebenenfalls mit der Häufigkeit der Benutzung, in dem Speicher 5.

Bei einer privaten Benutzung erfolgt das Abspeichern der Intemetadresse, gegebenenfalls ohne Identifizierung des Geräts und der Person, die das Gerät benutzt, in dem zweiten Speicher 6.

Anschließend erfolgt ein Vergleich der Adressen. Bei einer als privat deklarierten Adresse erfolgt eine Abfrage, ob diese auch im dienstlichen Speicher 5 steht, und umgekehrt. Diejenigen Adressen, die häufiger in beiden Speichern 5, 6 auftreten, können in einem gemeinsamen Speicher 8 untergebracht sein.

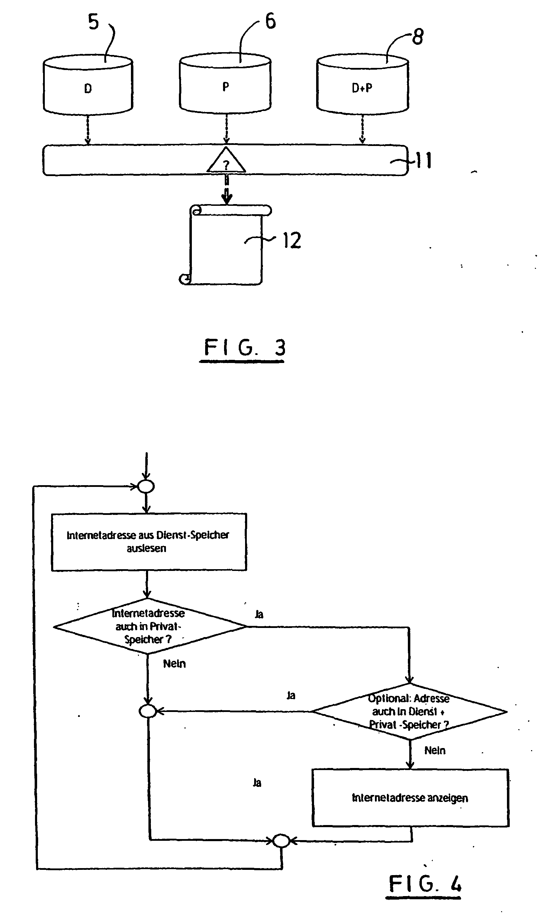

Die Figur 3 zeigt die Anordnung bei der Auswertung. Die Auswerteeinrichtung 11 ist mit dem dienstlichen Speicher 5, den privaten Speicher 6 und dem Speicher 8 für die die dienstliche und private Benutzung verbunden. Angezeigt, beispielsweise auf einer Liste 12, werden nur solche Aufrufe des Internet, die sowohl im Speicher 5 als auch in die Speicher 6 enthalten sind, nicht aber im Speicher 8.

Der Ablauf der Auswertung ist in Figur 4 dargestellt.

Die Erfindung schlägt vor, die Speicher 5 für die dienstliche Benutzung und die Speicher 6 für die private Benutzung von mehreren Unternehmen oder mehreren Behörden, also mehreren abgeschlossenen Einheiten, zusammenzufassen. Dadurch lässt sich die Genauigkeit der als Endergebnis zu überprüfenden Zugriffe auf das Internet steigern. Es wird daher möglich, einem Unternehmen, das eine solche Einrichtung einführt, eine Menge von vorgegebenen dienstlichen und privaten Internetadressen zur Verfügung zu stellen, so dass der ursprünglich benötigte Lerneffekt zeitlich verkürzt werden kann.

In Weiterbildung der Erfindung kann dann vorgesehen sein, diesen Vorrat an Internetadressen nach bestimmten Unternehmensgruppen zu klassifizieren.

## Patentansprüche

1. Anordnung zum Protokollieren und Kontrollieren von Benutzungsvorgängen, mit
einer Vielzahl von auf das Internet zugreifenden Benutzungsgeräten (1), die
sowohl privat als auch dienstlich benutzt werden können,
einer Aufzeichnungseinrichtung, die
bei einer privaten Benutzung die Internetadressen in einem Speicher (6) und
bei einer dienstlichen Benutzung die Internetadressen und das Benutzungsgerät und/oder den Benutzer in einem zweiten Speicher (5) aufzeichnet,
einer Schalteinrichtung (4) zur Auswahl der Benutzungsart, **dadurch gekennzeichnet, dass**
eine Vergleichseinrichtung für die beiden den jeweiligen Benutzungsarten zugeordneten Speicher (5, 6) untereinander das gemeinsame Auftreten von Internetadressen in diesen Speichern erkennt.

2. Anordnung nach Anspruch 1, bei der bei einer privaten Benutzung
keine Aufzeichnung der Identifizierung des Benutzungsgeräts oder des Benutzers erfolgt.

3. Anordnung nach Anspruch 1, bei der bei einer privaten Benutzung auch eine Identifizierung des Benutzungsgeräts und des Benutzers abgespeichert wird und die Vergleichseinrichtung derart ausgebildet ist, dass sie die Individualisierung der privaten Benutzung ausschließt.

4. Anordnung nach einem der vorhergehenden Ansprüche, mit einer Tabelle zur Abspeicherung von Intemetadressen, die sowohl dienstlich als auch privat benutzt werden.

5. Anordnung nach Anspruch 4, mit einer Anzeigeeinrichtung zur Anzeige nur derjenigen Internetadressen aus dem der dienstlichen Benutzung zugeordneten Speicher (5), die auch in dem der privaten Benutzung zugeordneten Speicher (6) enthalten sind.

6. Anordnung nach Anspruch 5, bei der die Anzeigeeinrichtung derart ausgebildet ist, dass sie die in der Tabelle der doppelt genutzten Internetadressen enthaltenen Adressen auch dann nicht anzeigt, wenn diese in dem der dienstlichen Benutzung zugeordneten Speicher enthalten sind.

7. Anordnung nach Anspruch 5 oder 6, bei der die Anzeigeeinrichtung derart ausgebildet ist, dass sie auch das jeweilige Gerät und/oder den Benutzer angibt.

8. Verfahren zum Protokollieren und Kontrollieren von Benutzungsvorgängen, mit folgenden Verfahrensschritten:
bei Beginn der Benutzung wird die Benutzungsart, nämlich privat oder dienstlich, ausgewählt,
während der privaten Benutzung werden nur die ausgewählten Internetadressen gespeichert,
während der dienstlichen Benutzung werden die Internetadressen und die Identifizierung des Benutzers gespeichert,
ch **gekennzeichnet**, dass
mindestens stichprobenweise die als privat ausgewählten Internetadressen mit den als dienstlich ausgewählten Internetadressen verglichen werden, und
bei einem positiv verlaufenden Vergleich die Internetadressen und die Identifizierung des Benutzers ausgegeben beziehungsweise angezeigt werden.

9. Verfahren nach Anspruch 8, bei dem während der privaten Benutzung die ausgewählten Internetadressen ohne den Benutzer gespeichert werden.

10. Verfahren nach Anspruch 8 oder 9, bei dem vor oder nach dem Vergleich bekannte sowohl dienstlich als auch privat verwendbare Internetadressen ausgeblendet werden.

11. Verfahren nach einem der Ansprüche 8 - 10, bei dem sowohl dienstlich als auch privat verwendbare Internetadressen in einem Speicher (5, 6, 8) gesammelt werden.

12. Verfahren nach einem der Ansprüche 8-11, bei dem anstelle der privat aufgerufenen Internetadressen deren Hash-Werte abgespeichert und zum späteren Vergleich herangezogen werden.

## Claims

1. Arrangement for logging and monitoring use operations, having
a multiplicity of use appliances (1) which access the internet and which
can be used both privately and officially,
a recording device which,
for private use, records the internet addresses in a memory (6) and,
for official use, records the internet addresses and
the use appliance and/or the user in a second memory (5),
a switching device (4) for selecting the type of use, **characterized in that**
a comparison device for comparing the two memories (5, 6) associated with the respective types of use recognizes the joint occurrence of internet addresses in these memories.

2. Arrangement according to Claim 1, wherein private use does not involve any recording of the identification of the use appliance or of the user.

3. Arrangement according to Claim 1, wherein private use also involves storage of an identification for the user appliance and for the user, and the comparison device is designed such that it precludes the individualization of the private use.

4. Arrangement according to one of the preceding claims, having a table for storing internet addresses which are used both officially and privately.

5. Arrangement according to claim 4 , having a display device for displaying only those internet addresses from the memory (5) associated with the official use which are also contained in the memory (6) associated with the private use.

6. Arrangement according to Claim 5, wherein the display device is designed such that it does not display the addresses contained in the table of internet addresses used twice even if said addresses are contained in the memory associated with the official use.

7. Arrangement according to Claim 5 or 6, wherein the display device is designed such that it also indicates the respective appliance and/or the user.

8. Method for logging and monitoring use operations, having the following method steps:
at the start of use, the type of use, namely private or official, is selected,
during the private use, only the selected internet addresses are stored,
during the official use, the internet addresses and the identification of the user are stored,
**characterized in that**
at least on a random basis, the internet addresses selected as private are compared with the internet addresses selected as official, and
a comparison with a positive trend involves the internet addresses and the identification of the user being output or displayed.

9. Method according to Claim 8, wherein, during the private use, the selected internet addresses are stored without the user.

10. Arrangement according to Claim 8 or 9, wherein, before or after the comparison, known internet addresses which can be used both officially and privately are hidden.

11. Arrangement according to one of Claims 8 - 10, wherein internet addresses which can be used both officially and privately are gathered in a memory (5, 6, 8).

12. Method according to one of Claims 8 - 11, wherein, instead of the privately called internet addresses, the hash values thereof are stored and are used for the later comparison.

## Revendications

1. Dispositif de consignation et de suivi de processus d'utilisation, comprenant :
une pluralité d'appareils utilisateurs (1) ayant accès à l'Internet, qui
peuvent être utilisés à la fois de manière privée et professionnelle,
un moyen d'enregistrement qui,
lors d'une utilisation privée, enregistre les adresses internet dans une mémoire (6), et
lors d'une utilisation professionnelle, enregistre les adresses internet et l'appareil utilisateur et/ou l'utilisateur dans une deuxième mémoire (5),
un moyen de commutation (4) pour sélectionner le mode d'utilisation,
**caractérisé en ce que** :
un moyen de comparaison destiné aux deux mémoires (5, 6) associées à chaque mode d'utilisation reconnaît les unes des autres les apparitions simultanées d'adresses internet dans ces mémoires.

2. Dispositif selon la revendication 1, dans lequel, lors d'une utilisation privée, il ne se produit aucun enregistrement de l'identification de l'appareil utilisateur ou de l'utilisateur.

3. Dispositif selon la revendication 1, dans lequel, lors d'une utilisation privée, une identification de l'appareil utilisateur et de l'utilisateur est stockée et le moyen de comparaison est conçu de telle manière à exclure l'individualisation de l'utilisation privée.

4. Dispositif selon l'une des revendications précédentes, comprenant une table destinée au stockage d'adresses internet qui sont utilisées à la fois de manière professionnelle et privée.

5. Dispositif selon la revendication 4 , comprenant un moyen d'affichage destiné à n'afficher que les adresses internet provenant de la mémoire (5) associée à l'utilisation professionnelle, et qui sont également présentes dans la mémoire (6) associée à l'utilisation privée.

6. Dispositif selon la revendication 5, dans lequel le moyen d'affichage est conçu de manière à ce qu'il n'affiche pas non plus les adresses contenues dans la table d'adresses internet utilisées en double lorsque ces dernières sont contenues dans la mémoire associée à l'utilisation professionnelle.

7. Dispositif selon la revendication 5 ou 6, dans lequel le moyen d'affichage est conçu de manière à ce qu'il indique également l'appareil et/ou l'utilisateur respectif.

8. Procédé de consignation et de suivi de processus d'utilisation, comprenant les étapes de procédé suivantes :
au début de l'utilisation, le mode d'utilisation, à savoir privé ou professionnel, est sélectionné,
pendant l'utilisation privée, seules les adresses internet sélectionnées sont stockées,
pendant l'utilisation professionnelle, les adresses internet et l'identification de l'utilisateur sont stockées,
**caractérisé en ce que**
les adresses internet sélectionnées en tant qu'adresses privées sont comparées au moins aléatoirement aux adresses internet sélectionnées en tant qu'adresses professionnelles, et
dans le cas d'une comparaison donnant un résultat positif, les adresses internet et l'identification de l'utilisateur sont fournies en sortie ou affichées.

9. Procédé selon la revendication 8, dans lequel, lors de l'utilisation privée, les adresses internet sélectionnées sont stockées sans l'utilisateur.

10. Procédé selon la revendication 8 ou 9, dans lequel, avant ou après la comparaison, les adresses internet utilisables aussi bien de manière professionnelle que privée sont masquées.

11. Procédé selon l'une des revendications 8 à 10, dans lequel les adresses internet utilisables aussi bien de manière professionnelle que privée sont collectées dans une mémoire (5, 6, 8).

12. Procédé selon l'une des revendications 8 à 11, dans lequel les valeurs de hachage des adresses internet appelées de manière privée sont stockées au lieu de celles-ci et sont utilisées pour une comparaison ultérieure.
